# EUROPEAN PATENT SPECIFICATION

(11) **EP 4 079 581 B1**
(45) Date of publication and mention of the grant of the patent: **26.04.2023**
(21) Application number: 21305527.0
(22) Date of filing: 21.04.2021
(51) Int. Cl.: B60R 19/04, B60R 19/18

(54) **REINFORCEMENT OF BUMPER COVER FOR PEDESTRIAN PROTECTION**
VERSTÄRKUNG EINER STOSSFÄNGERABDECKUNG ZUM FUSSGÄNGERSCHUTZ
RENFORCEMENT DE COUVERCLE DE PARE-CHOCS POUR LA PROTECTION DES PIÉTONS

(43) Date of publication of application: 26.10.2022
(73) Proprietor: TOYOTA JIDOSHA KABUSHIKI KAISHA, Toyota-shi, Aichi-ken 471-8571 (JP)
(72) Inventor: BUSCAGLIONE, Luca, 1140 BRUSSELS (BE); KONDRATIEV, Sergey, 1140 BRUSSELS (BE); ROMAIN, Jayr, 1140 BRUSSELS (BE)
(74) Representative: Cabinet Beau de Loménie

(56) References cited:
- FR-A1- 2 883 238
- US-A1- 2020 164 822

## Description

### FIELD

The present disclosure relates to the field of automobile front assemblies and pedestrian-protecting components thereof, in particular as regards protecting a pedestrian's leg during impact.

### BACKGROUND ART

Vehicles are known from documents such as United States Patents n° 7,699,383, 7,740,293, 6,997,490, 6,447,049, 9,415,734, and Korean patent KR 101896807 B1, which have front assemblies which may be made to contact pedestrians during pedestrian collisions. Pedestrian protection protocols such as UN regulation No. 127 "Uniform provisions concerning the approval of motor vehicles with regard to their pedestrian safety performance" (hereinafter UN Reg. 127) and the European New Car Assessment Program (hereinafter Euro NCAP) establish criteria by which motor vehicles, such as cars, are evaluated as concerns a collision with a pedestrian. Amongst these criteria are criteria related to collisions with the leg of a pedestrian.

One or more energy-absorbing components are commonly provided in vehicle front assemblies to reduce forces applied to pedestrians during impact. However, recent trends in vehicle construction and styling limit space available for such components, reducing their effectiveness at preventing certain injuries to pedestrians' knees, as evaluated using the criteria described above. US 2020/164822 discloses a vehicle front structure. FR 2883238 discloses a vehicle bumper comprising a casing, a beam and reinforcement members.

### SUMMARY

The inventors have recognized that pedestrian safety may be improved by reducing elongation of the pedestrian's anterior cruciate ligament (ACL) during pedestrian-vehicle collisions. To that end, a vehicle front assembly according to the invention is defined by the features of claim 1. The vehicle front assembly includes a bumper cover, a cross beam, one or more absorbers, and a reinforcement. The cross beam extends in a first direction between two extremities. The one or more absorbers are arranged between the cross beam and the bumper cover as measured in a second direction. The second direction is orthogonal to the first direction. The reinforcement is more rigid than the bumper cover. The reinforcement is concealed by the bumper cover. The reinforcement is directly connected to the bumper cover. The reinforcement includes an impact plate which is arranged offset in a third direction with respect to a lateral extremity of the cross beam. The third direction is orthogonal to the first direction and the second direction.

The impact plate may be substantially conformal with the bumper cover.

The impact plate may be in contact with the bumper cover.

The impact plate may be bonded to the bumper cover.

The impact plate may have a thickness of 1-5 mm (millimeters), inclusive, as measured in an impact direction.

The impact plate may be delimited peripherally by a skirt arranged to extend towards and/or away from the bumper cover with respect to the impact plate.

The skirt may be arranged peripherally around the impact plate.

The impact plate may be bonded to the bumper cover at a junction between the skirt and the impact plate.

The reinforcement may include one or more attachment points for attaching the impact plate to the bumper cover.

The one or more attachment points may be separated from the impact plate by the skirt.

The one or more attachment points may include one or more medial attachment points arranged on a medial portion of the reinforcement with respect to the first direction, for connecting to a central portion of the bumper cover, and a lateral attachment point arranged on a lateral portion of the reinforcement with respect to the first direction, for connecting to a side portion of the bumper cover.

The reinforcement may include one or more ribs arranged to extend from the impact plate. The one or more ribs may be arranged to extend towards and/or away from the bumper cover with respect to the impact plate.

The one or more ribs may extend between a first interior surface of the skirt and a second interior surface of the skirt.

The one or more ribs may have a thickness of 0.5-2.5 mm, inclusive.

The vehicle front assembly may include a lighting assembly located behind the reinforcement in an impact direction.

The reinforcement may be configured to bear on the lighting assembly during pedestrian impact.

The reinforcement may be made of a plastic-containing material.

Such a vehicle front assembly may cause reduced elongation of a pedestrian's anterior cruciate ligament during impact than a vehicle front assembly which lacks a reinforcement.

Additionally or alternatively, a vehicle may be provided. The vehicle includes a vehicle front assembly as described earlier herein.

### BRIEF DESCRIPTION OF THE DRAWINGS

The disclosure may be more completely understood in consideration of the following detailed description of aspects of the disclosure in connection with the accompanying drawings, in which:
Fig. 1 shows an exemplary vehicle;
Fig. 2 shows a detail view of a right front portion of the vehicle of Fig. 1;
Fig. 3 shows selected components of a vehicle front assembly and lighting assembly visible in Fig. 2;
Fig. 4 shows a front view of a reinforcement visible in Fig. 3;
Fig. 5 shows a side view of the reinforcement of Fig. 4;
Fig. 6 shows a side view of the components visible in Fig. 3 during collision with a lower legform impactor representing a pedestrian's leg;
Fig. 7 shows a detail view of a knee portion of the legform impactor in Fig. 6;
Fig. 8 shows plots of contact force between the legform impactor and the vehicle front assembly over time;
Fig. 9 shows plots of elongation over time of a ligament of the legform impactor representative of an anterior cruciate ligament of the pedestrian's leg.

The term "exemplary" is used in the sense of "example," rather than "ideal." While aspects of the disclosure are amenable to various modifications and alternative forms, specifics thereof have been shown by way of example in the drawings and will be described in detail. It should be understood, however, that the intention is not to limit aspects of the disclosure to the particular embodiment(s) described. On the contrary, the intention of this disclosure is to cover all modifications, equivalents, and alternatives falling within the scope of the disclosure.

### DETAILED DESCRIPTION

As used in this disclosure and the appended claims, the singular forms "a", "an", and "the" include plural referents unless the content clearly dictates otherwise. As used in this disclosure and the appended claims, the term "or" is generally employed in its sense including "and/or" unless the content clearly dictates otherwise.

The following detailed description should be read with reference to the drawings. The detailed description and the drawings, which are not necessarily to scale, depict illustrative aspects and are not intended to limit the scope of the disclosure. The illustrative aspects depicted are intended only as exemplary.

When an element or feature is referred to herein as being "on," "engaged to," "connected to," or "coupled to" another element or feature, it may be directly on, engaged, connected, or coupled to the other element or feature, or intervening elements or features may be present. In contrast, when an element or feature is referred to as being "directly on," "directly engaged to," "directly connected to," or "directly coupled to" another element or feature, there may be no intervening elements or features present. Other words used to describe the relationship between elements or features should be interpreted in a like fashion (for example, "between" versus "directly between," "adjacent" versus "directly adjacent," etc.).

Although the terms "first," "second," etc. may be used herein to describe various elements, components, regions, layers, sections, and/or parameters, these elements, components, regions, layers, sections, and/or parameters should not be limited by these terms. These terms are only used to distinguish one element, component, region, layer, or section from another region, layer, or section. Thus, a first element, component, region, layer, or section discussed herein could be termed a second element, component, region, layer, or section without departing from the teachings of the present inventive subject matter.

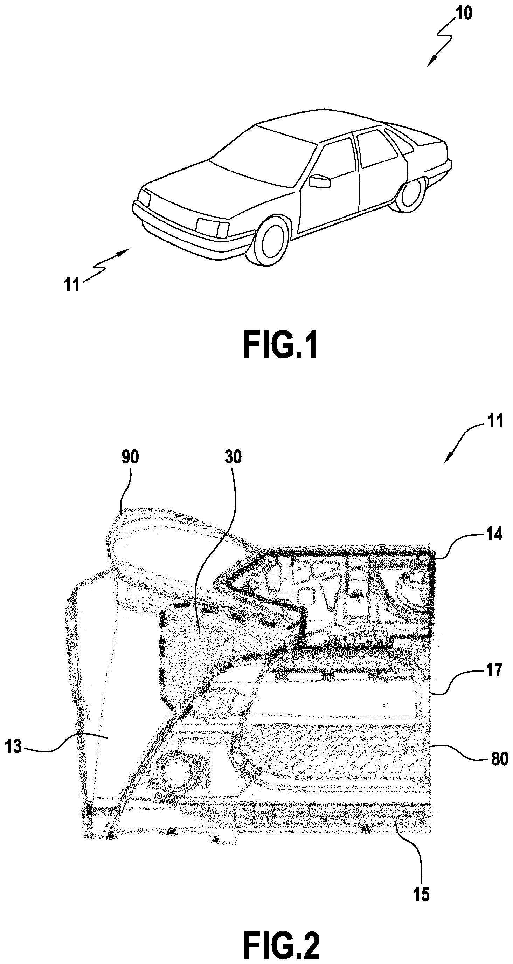

Fig. 1 shows an exemplary vehicle 10 in perspective view. In a conventional manner, the vehicle 10 includes a vehicle front assembly 11 on its front portion. Although the vehicle front assembly 11 is shown as being provided for a car-type vehicle, such as a sedan or coupe, it is contemplated to provide such a vehicle front assembly 11 to any automobile vehicle.

Fig. 2 shows a detail view of a right front portion of the vehicle 10 of Fig. 1. The vehicle front assembly 11 includes a bumper cover 13, a cross beam extending in an assembly width direction.

The assembly width direction corresponds to a width direction of the vehicle 10 (also known as "vehicle width direction") when the vehicle front assembly 11 is mounted on the vehicle 10. In a conventional manner, the vehicle width direction is orthogonal to a height direction of the vehicle 10 (also known as "vehicle height direction") and a length direction of the vehicle 10 (also known as "vehicle length direction"). The vehicle height direction corresponds to vertical when the vehicle 10 is driving on a single, flat, horizontal surface. The vehicle length direction corresponds to a linear driving movement of the vehicle 10, colloquially known as forward and reverse movement, or straight-ahead and straight-back movement.

The vehicle front assembly 11 includes one or more absorbers 15, 17, each of which is a component arranged between the bumper cover 13 and a center of the vehicle 10 when the vehicle front assembly 11 is mounted on the vehicle 10, and which is configured to deform during impact when borne on by the bumper cover 13. The center of the vehicle is a position in space located intermediate front and rear extremities of the vehicle 10 in the vehicle length direction, and intermediate left and right lateral extremities of the vehicle 10 in the vehicle width direction.

In the example illustrated here, the vehicle front assembly 11 includes a lower absorber 15 and an upper absorber 17 arranged in series in the assembly height direction. The assembly height direction corresponds to the vehicle height direction when the vehicle front assembly 11 is mounted on the vehicle 10.

In the example illustrated here, the cross beam is arranged behind an upper absorber 17 of the vehicle front assembly 11 in an assembly length direction. The assembly length direction corresponds to the vehicle length direction when the vehicle front assembly 11 is mounted on the vehicle 10.

In a conventional manner, the vehicle 10 includes a radiator 80 arranged such that a cross beam extends in the vehicle width direction beyond either side of the radiator 80 when the vehicle front assembly 11 is mounted to the vehicle 10. The vehicle front assembly 11 is configured to be mounted to the vehicle 10 such that the radiator 80 is located above the lower absorber 15 in the vehicle height direction, and behind the cross beam in a vehicle length direction (in this case perpendicular to the page).

The vehicle front assembly 11 optionally includes a lighting assembly 90. The lighting assembly 90 is arranged above the bumper cover 13 in the assembly height direction. In a conventional manner, the lighting assembly 90 includes a frame 91 in which a lamp housing 92 is mounted.

The vehicle front assembly 11 includes a reinforcement 30 which is configured to reduce probability of injury to a pedestrian's leg (for example to a knee thereof) during pedestrian impact. The reinforcement 30 is more rigid than the bumper cover 13, concealed by the bumper cover 13, and directly connected to the bumper cover 13. In the example illustrated here, the reinforcement 30 is arranged behind the bumper cover 13, and ahead of the lighting assembly 90 in the assembly length direction.

In the example illustrated here, the reinforcement 30 (shown in a dark dashed outline) is arranged behind a medial portion of the bumper cover 13 in the assembly length direction.

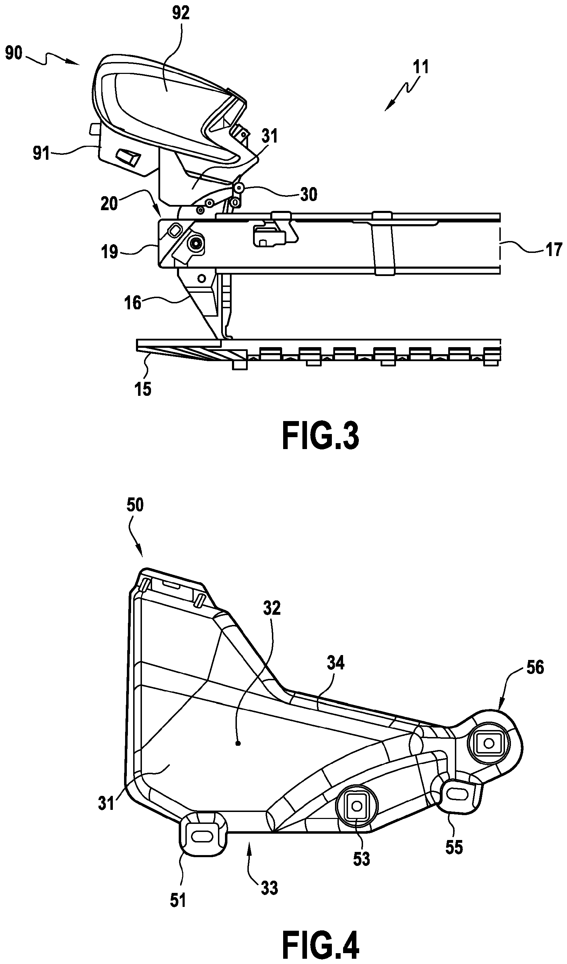

Fig. 3 shows a front view of components of the vehicle front assembly 11 and lighting assembly 90 visible in Fig. 2. For simplicity, components such as the bumper cover and radiator are not shown. The vehicle front assembly 11 optionally includes a radiator support 16 extending in the assembly height direction. The lower absorber 15 is configured to be supported at a lower portion of the radiator support 16. The frame 91 of the lighting assembly 90 is mounted on an upper portion of the radiator support 16. The cross beam 19 is attached to a middle portion of the radiator support 16, in a vicinity a lateral extremity 20 of the cross beam 19.

The reinforcement 30 includes an impact plate 31 arranged adjacent to the bumper cover. The impact plate 31 may, as seen in Fig. 3, be arranged directly adjacent to the bumper cover, or may be separated from the bumper cover 13 by another portion of the reinforcement 30.

The reinforcement 30 is mounted such that the impact plate 31 is arranged above the lateral extremity 20 of the cross beam 19, and arranged to be flush with or medial with respect to the lateral extremity 20 of the cross beam 19 in the assembly width direction. In the example illustrated here, a lateral edge of the impact plate 31 is flush with the lateral extremity 20 of the cross beam 19, and the impact plate 31 extends medially in the assembly width direction with respect to the lateral extremity 20 of the cross beam 19.

The impact plate 31 is located above the lateral extremity 20 of the cross beam 19, and extends in the assembly height direction towards the lighting assembly 90, such that the reinforcement 30 is able to bear on the frame 91 of the lighting assembly 90 during rearward movement of the reinforcement 30 in the vehicle length direction, as may occur during a pedestrian impact involving the front assembly 11 of the vehicle.

The impact plate 31 may have a thickness of 1 to 5 mm, inclusive, as measured in an impact direction. For example, the reinforcement 30 illustrated here has an impact plate 31 with a thickness of 3 mm. The impact direction may correspond to a normal direction of an interface between the impact plate 31 and the bumper cover.

During pedestrian impact, the reinforcement 30 transfers forces imparted to the bumper cover 13 by the pedestrian into relatively rigid areas of the vehicle front assembly 11, such as mounting points for the bumper cover 13, and/or to the lighting assembly 90. When the impact plate 31 is directly adjacent to the bumper cover 13, the impact plate 31 bears directly on the bumper cover 13 during pedestrian impact; when the impact plate 31 is separated from the bumper cover 13 by another portion of the reinforcement, the impact plate 31 may, for example, bear directly on the lighting assembly and/or on the body structure of the vehicle.

Fig. 4 shows a front view of the reinforcement 30 visible in Fig. 3. In the illustrated example, the impact plate 31 is provided at least on a perimeter of a frontal portion of the reinforcement 30. The impact plate 31 may extend inwardly from this perimeter to a center 32 of the reinforcement 30. The center 32 of the reinforcement 30 is located above a lower section of the perimeter in the assembly height direction, and below an upper section of the perimeter in the assembly height direction. The center 32 of the reinforcement 30 is located medially of a lateral section of the perimeter in the assembly width direction on and laterally of a medial section of the perimeter in the assembly width direction.

Since, in the illustrated example, the impact plate 31 is provided so as to be directly adjacent to the bumper cover (in this case a front bumper cover), the impact plate 31 extends inwardly from the perimeter to a center of the frontal portion of the reinforcement 30.

The impact plate 31 of the reinforcement 30 may be substantially conformal with the bumper cover. Such conformity may allow impact forces applied to the bumper cover to be distributed relatively evenly through the reinforcement 30.

The impact plate 31 may be configured to be in contact with the bumper cover, for example prior to pedestrian impact. In this way, at the start of pedestrian impact, the bumper cover is locally stiffened in a vicinity of its region of contact with the reinforcement 30.

The reinforcement 30 may be bonded to the bumper cover. In the present example, the impact plate 31 of the reinforcement 30 is bonded to the bumper cover. For example, adhesive may be applied on part of the impact plate 31 (for example to the periphery of the impact plate 31) or on the entire impact plate 31 (when the impact plate 31 extends to the center 32). It is also contemplated, however, for the impact plate 31 to be bonded to the bumper cover through welding instead of bonding using adhesive as described above.

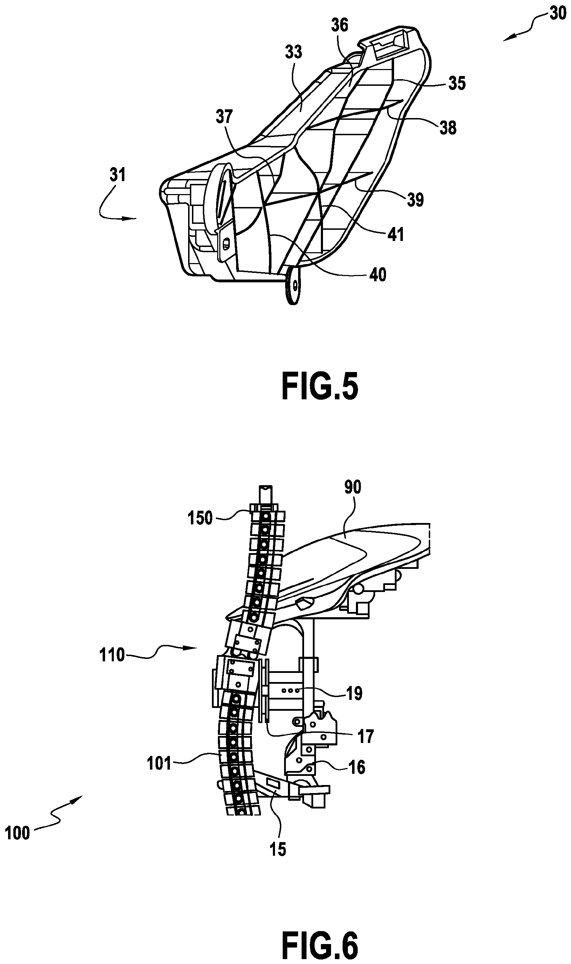

Fig. 5 shows a side view of the reinforcement 30 of Fig. 3. The impact plate 31 may be delimited peripherally by a skirt 33. Since, in the present example, the impact plate 31 is arranged to be directly adjacent the bumper cover, the skirt is arranged to extend from the impact plate and away from the bumper cover. However, if another portion of the reinforcement 30 is arranged between the impact plate 31 and the bumper cover, the skirt 33 may additionally or alternatively extend from the impact plate towards the bumper cover. When the skirt 33 is arranged at least partially between the impact plate 31 and the bumper cover, the skirt 33 may bear directly on the bumper cover during pedestrian impact.

The skirt 33 may offer rigidity to the reinforcement 30 against buckling of the impact plate 31 during pedestrian impact. In the example illustrated here, the skirt 33 extends away from the bumper cover rearwards in the assembly length direction (which in this case corresponds to rearwards in the vehicle length direction). The skirt 33 may, as seen here, also extend peripherally from the impact plate 31, regardless of whether the impact plate 31 is directly adjacent to the bumper cover.

When the reinforcement 30 is bonded to the bumper cover, it is contemplated to bond the reinforcement 30 to the bumper cover at a junction 34 of the impact plate 31 and the skirt 33, when the impact plate 31 is directly adjacent the bumper cover. When the impact plate 31 is not directly adjacent the bumper cover 13, it is contemplated to bond an extremity of the skirt 33 which is remote from said junction 34 to the bumper cover 13.

Returning now to Fig. 2, it can be seen that the vehicle front assembly 11 may include a bumper support 14 (represented by a dark solid outline). The bumper support 14 may be arranged medially of the reinforcement 30, and above the upper absorber 17. The bumper support 14 may be arranged between the bumper cover 13 and the body structure of the vehicle when the vehicle front assembly 11 is mounted to the vehicle.

Returning now to Fig. 4, it can be seen that the reinforcement 30 may include one or more attachment points 50, 53, 56 for attaching the impact plate 31 to the bumper cover. The attachment points 50, 53, 56 may be separated from the impact plate 31 by the skirt 33.

The reinforcement 30 may include one or more lateral attachment points 50 arranged on a lateral portion of the reinforcement 30 with respect to the assembly width direction, for attaching to a side portion of the bumper cover. In the example illustrated here, the reinforcement 30 includes a lateral attachment point 50 depending from an upper portion of the skirt 33. The lateral attachment point 50 is configured to connect to the bumper cover - for example by snap-fit - so as to be arranged between the bumper cover 13 and the frame of the lighting assembly.

The reinforcement 30 may include one or more medial attachment points 56 arranged on a medial portion of the reinforcement 30 with respect to the assembly width direction, for attaching to a central portion of the bumper cover. In the example illustrated here, the reinforcement 30 includes a medial attachment point 56. The medial attachment point 56 is configured to attach to the bumper cover 13, for example by way of the bumper support. The medial attachment point 56 may be fixed to the bumper support by means of a tapping screw, for example.

In the example illustrated here, the reinforcement 30 further includes at least one intermediate attachment point 53 arranged between the lateral attachment point(s) 50 and the medial attachment point(s) 56 in the assembly width direction. The intermediate attachment point 53 is configured to attach to the bumper cover. For example, the intermediate attachment point 53 may be fixed to the bumper cover by means of a tapping screw.

Optionally, the reinforcement 30 may include one or more clamping holes 51, 55 for routing hoses, wire harnesses, and the like to equipment which may be mounted on or in the bumper.

Returning now to Fig. 5, it can be seen that the reinforcement 30 may include one or more ribs 35-41 arranged to extend from the impact plate 31 and away from the bumper cover. In the illustrated example, the ribs 35-41 extend rearward from the impact plate 31 in the assembly length direction. When the vehicle front assembly is mounted to a front of a vehicle, "rearward" in the assembly length direction corresponds to "rearward" in the vehicle length direction (towards the rear extremity of the vehicle). Although each of the ribs 35-41 shown here extends rearward along the assembly length direction by an equivalent amount to the skirt 33, it is also contemplated for one or more of the ribs 35-41 to extend by a different amount along the assembly width direction than the skirt 33. Moreover, although the ribs 35-41 are shown as extending the same length as each other in the assembly length direction, when multiple ribs 35-41 are provided, it is contemplated for at least two of the ribs 35-41 to extend along the assembly width direction by a different amount from one another.

When the impact plate 31 is not directly adjacent to the bumper cover, the ribs 35-41 may additionally or alternatively extend from the impact plate 31 towards the bumper cover. Therefore, they would extend forward from the impact plate 31 in the vehicle direction when the bumper cover is a front bumper cover. When the ribs 35-41 are at least partially arranged between the impact plate 31 and the bumper cover, one or more of the ribs 35-41 may bear directly on the bumper cover during pedestrian impact.

The ribs 35-41 may have a same length in the assembly length direction, as measured from the impact plate, when the impact plate is conformal to the bumper cover.

Each of the one or more ribs 35-41 may extend between a first interior surface of the skirt 33 and a second interior surface of the skirt 33. An interior surface of the skirt 33 is a surface of the skirt 33 which is arranged to face the junction between the skirt 33 and the impact plate 31.

For example, the reinforcement 30 may include one or more primary ribs 35-37 which extend in the assembly height direction from the upper portion of the skirt 33 to the lower portion of the skirt 33. In the example illustrated here, the reinforcement 30 includes a lateral primary rib 35 arranged in the lateral portion of the reinforcement 30, a medial primary rib 37 arranged in the medial portion of the reinforcement 30, and an intermediate primary rib 36 arranged between the lateral primary rib 35 and the medial primary rib 37 in the assembly width direction.

Additionally or alternatively, the reinforcement 30 may include one or more secondary ribs 38-39 which extend in the assembly width direction from a medial portion of the skirt 33 to a lateral portion of the skirt 33. In the example illustrated here, the reinforcement 30 includes a superior secondary rib 38 arranged in an upper portion of the reinforcement 30 and an inferior secondary rib 39 arranged below the superior secondary rib 38 in the assembly height direction. Generally speaking, however, the presence of one or more secondary ribs 38-39 does not imply the presence of one or more primary ribs 35-37.

Additionally or alternatively, the reinforcement 30 may include one or more tertiary ribs 40-41, which are configured to extend in the assembly height direction and in the assembly width direction between a first interior surface of the skirt 33 and a second interior surface of the skirt 33. Generally speaking, however, the presence of one or more tertiary ribs 40-41 does not imply the presence of one or more primary ribs 35-37 or one or more secondary ribs 38-39. In the example illustrated here, the reinforcement 30 includes two tertiary ribs 40-41 which are arranged to extend laterally in the assembly width direction and downward in the assembly height direction between the upper portion of the skirt 33 and the lower portion of the skirt 33.

One or more of the ribs 35-41 described above may have a rib thickness of 0.5-2.5 mm (millimeters), inclusive, for example 1 mm. Rib thickness may be measured perpendicular to the assembly length direction, for example, and perpendicular to the direction in which the rib extends.

The reinforcement 30 may be made of a plastic-containing material, for example polypropylene, acrylonitrile butadiene styrene, acrylonitrile styrene acrylate, acrylonitrile ethylene styrene, polycarbonate, polyoxymethylene, or combinations thereof. The plastic-containing material may be fiber-reinforced, as with glass-fiber-reinforced polypropylene or glass-fiber-reinforced blend(s) of polypropylene and ethylene/propylene for example.

Fig. 6 shows a side view of the components visible in Fig. 3 during collision with a pedestrian lower legform impactor 100 representing an adult human pedestrian's leg. For simplicity, the reinforcement is not shown.

The impactor 100 conforms to the UN Reg. 127, dated 23 May 2018, and is used in evaluating a vehicle's front assembly according to the Euro NCAP "Assessment Protocol - Pedestrian Protection" (version 9.0.2, dated November 2017) regarding probability of knee injuries.

As a non-limiting example, the impactor 100 may be a Flex-PLI impactor, (available from Humanetics for example), or an aPLI (impactor available from Cellbond for example). The impactor 100 includes a lower leg portion 101 representative of at least a pedestrian's tibia, and an upper leg portion 150 representative at least of the pedestrian's femur. The lower leg portion 101 and upper leg portion 150 are joined to one another at a knee portion 110 of the impactor 100, representative of the pedestrian's knee between his/her femur and tibia.

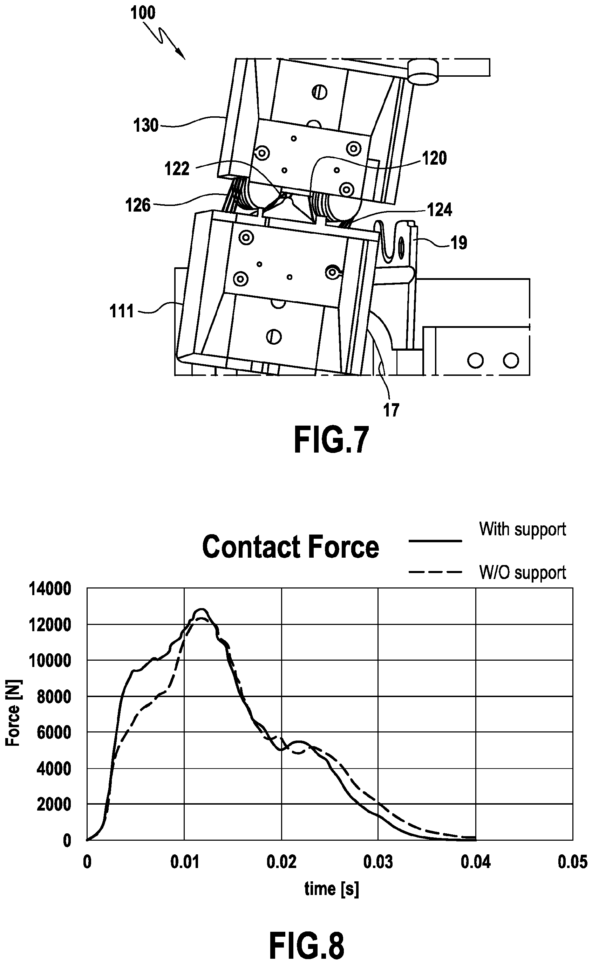

Fig. 7 shows a detail view of the knee portion 110 of the impactor 100 seen in Fig. 6. The knee portion 110 includes a lower knee block 111 attached to the lower leg portion 101, an upper knee block 130 attached to the upper leg portion 150, and one or more ligaments by way of which the lower knee block 111 is attached to the upper knee block 130.

The impactor 100 illustrated here includes a first ligament 120 representative of the pedestrian's anterior cruciate ligament, a second ligament 122 representative of the pedestrian's posterior cruciate ligament, a third ligament 124 representative of the pedestrian's lateral collateral ligament, and a fourth ligament 126 representative of the pedestrian's medial collateral ligament.

Returning now to Fig. 6, it can be seen that, during pedestrian impact the lower absorber 15 is positioned to apply forces to the lower leg portion 101 of the impactor 100, whereas the upper absorber 17 is positioned to apply forces to the lower knee block 111 and the upper knee block 130.

During pedestrian impact, the vehicle contacts a lateral portion of the impactor 100 and applies a force directed towards a medial portion of the impactor 100. The upper absorber 17 and cross beam 19 are located approximately at the same position in the vehicle height direction as the lower knee block 111.

When no reinforcement is provided, contact occurs between the vehicle front assembly and the impactor primarily or entirely below the knee portion 110. Consequently, the lower knee block 111 may be made to translate excessively relative to the upper knee block 130, which may cause excessive elongation of one or more ligaments, such as the first ligament 120. Providing the reinforcement allows forces to be applied to the upper knee block 130 and/or to the upper leg portion 150 during impact, so that elongation of the first ligament 120 may be reduced.

Fig. 8 shows plots of contact force between the legform impactor and the vehicle front assembly over time: the solid line represents to contact force between the legform impactor and the vehicle (in for example the vehicle front assembly and lighting assembly) when the vehicle includes the reinforcement seen in Fig. 2-5, whereas the dashed line represents the contact force between these same items when the vehicle front assembly lacks such a reinforcement.

In both plots, the contact force can be seen to change from being negligible at time = 0.00 seconds. Shortly after time = 0.00 seconds, both plots can be seen to rise initially relatively rapidly, and appear to substantially coincide with one another. This corresponds to an initial reaction force provided by the vehicle front assembly.

Subsequently, the plots diverge as the dashed line begins to rise relatively gradually shortly after surpassing 4 kN (kilo-Newton), while the solid line continues to rise relatively rapidly. After surpassing approximately 9 kN, the solid line also begins to rise relatively gradually instead of relatively rapidly. The relatively gradual rise seen in each plot corresponds to evolutions in the reaction force provided by each assembly's absorbers during their deformation. The difference in behavior observed in these two plots is due to the presence of the reinforcement for the solid plot, and is associated with a reduction in the probability of leg injuries for the solid plot relative to the dashed plot.

Shortly before time = 0.01 seconds, both plots can be seen to rise relatively rapidly again. The relatively rapid rise seen in each plot corresponds to contact between the impactor and the lighting assembly. The dashed line can be seen to begin this relatively rapid rise shortly after surpassing 8 kN, whereas the solid line can be seen to begin this relatively rapid rise shortly after surpassing 10 kN. Both plots can be seen to surpass 11 kN by time = 0.01 seconds.

Shortly after time = 0.01 seconds, both plots can be seen to peak at over 12 kN, at approximately the same time as one another. This corresponds to maximum intrusion of the impactor in the vehicle and the maximum amount of energy absorbed by the vehicle. The solid line can be seen to peak at a larger value than the dashed line.

After peaking, both plots can be seen to substantially coincide with each other during subsidence until approximately time = 0.02 seconds. This corresponds to rebound of the impactor away from the vehicle. Behavior of the impactor beyond this stage is relatively inconsequential in terms of reducing the probability of leg injury (for example knee injury) during pedestrian impact, and so will not be described further.

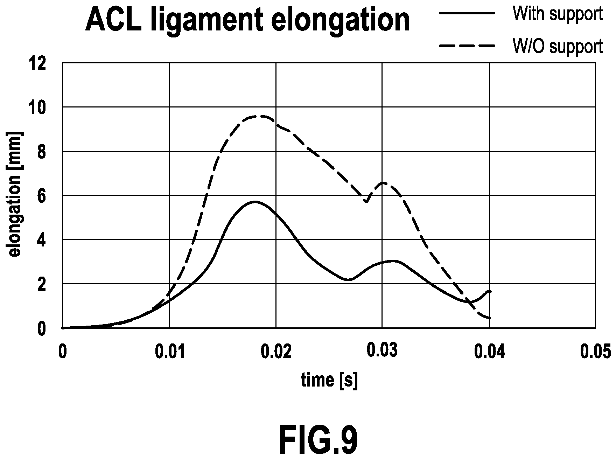

Fig. 9 shows plots of elongation over time of the first ligament of the legform impactor seen in Fig. 6-7. The time period represented for these plots corresponds to the time period represented in Fig. 8. As with Fig. 8, the solid line represents the case where the reinforcement is provided, and the dashed line represents the case where the reinforcement is not provided.

At time = 0.00 seconds, both plots are shown to have negligible elongation, and to rise relatively steadily shortly thereafter. The two plots can be seen to substantially coincide with one another until shortly after reaching an elongation of approximately 1 mm (millimeters), at which point elongation accelerates in the dashed line with respect to the solid line.

Shortly after time = 0.01 seconds, the dashed line reaches an elongation of 2 mm, considerably before the solid line reaches such an elongation. By the time the solid line reaches such an elongation, the dashed line can be seen to reach an elongation of approximately 5 mm. By the time the dashed line reaches an elongation of 8 mm, the solid line has merely reached an elongation approximately half that of the dashed line.

Both plots can be seen to continue rising until peaking shortly before time = 0.02 seconds. The dashed line can be seen to peak between 9 and 10 mm, whereas the solid line can be seen to peak between 5 and 6 mm. Peaking occurs approximately simultaneously for the two plots.

After peaking, both plots can be seen to subside steadily until time = 0.02 seconds.

Although the described embodiments were provided as different exemplary embodiments, it is envisioned that these embodiments are combinable or, when not conflicting, the features recited in the described embodiments may be interchangeable. Moreover, the features recited in the described embodiments are not inextricably linked to one another, unless such a linkage is clearly indicated between two given features.

Throughout the description, including the claims, the term "comprising a" should be understood as being synonymous with "comprising at least one" unless otherwise stated. In addition, any range set forth herein, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A vehicle front assembly (11) including: a bumper cover (13), a cross beam (19) extending in a first direction between two extremities (20), one or more absorbers (15, 17), arranged between the cross beam (19) and the bumper cover (13) in a second direction orthogonal to the first direction, a reinforcement (30), which is more rigid than the bumper cover (13), concealed by the bumper cover (13), and directly connected to the bumper cover (13), including an impact plate (31) arranged offset in a third direction, orthogonal to the first and second directions, above a corresponding lateral extremity (20) among the two lateral extremities (20) of the cross beam (19).

2. The vehicle front assembly (11) of claim 1, the impact plate (31) being substantially conformal with the bumper cover (13) and/or in contact with the bumper cover (13).

3. The vehicle front assembly (11) of claim 2, the impact plate (31) being bonded to the bumper cover (13).

4. The vehicle front assembly (11) of any of claims 1 to 3, wherein the impact plate (31) has a thickness of 1-5 mm, inclusive, as measured in an impact direction.

5. The vehicle front assembly (11) of any of claims 1 to 4, the impact plate (31) being delimited peripherally by a skirt (33) arranged to extend from the impact plate (31) towards and/or away from the bumper cover (31) and optionally being bonded to the bumper cover (13) at a junction (34) between the skirt (33) and the impact plate (31).

6. The vehicle front assembly (11) of any of claims 1 to 5, the reinforcement (30) comprising one or more attachment points (50, 53, 56) for attaching the impact plate (31) to the bumper cover (13).

7. The vehicle front assembly (11) of claims 5 and 6, the one or more attachment points (50, 53, 56) being separated from the impact plate (31) by the skirt (33).

8. The vehicle front assembly (11) of any of claims 6 to 7, wherein the one or more attachment points (50, 53, 56) includes one or more medial attachment points (56) arranged on a medial portion of the reinforcement (30) with respect to the first direction, for connecting to a central portion of the bumper cover (13), and a lateral attachment point (50) arranged on a lateral portion of the reinforcement (30) with respect to the first direction, for connecting to a side portion of the bumper cover (13).

9. The vehicle front assembly (11) of any of claims 1 to 8, the reinforcement (30) including one or more ribs (35, 36, 37, 38, 39, 40, 41) arranged to extend from the impact plate (31) towards and/or away from the bumper cover (13).

10. The vehicle front assembly (11) of claims 6 and 9, the one or more ribs (35, 36, 37, 38, 39, 40, 41) extending between a first interior surface of the skirt (33) and a second interior surface of the skirt (33).

11. The vehicle front assembly (11) of claim 10, the one or more ribs (35, 36, 37, 38, 39, 40, 41) having a thickness of 0.5-2.5 mm, inclusive.

12. The vehicle front assembly (11) of any of claims 1 to 11, including a lighting assembly (90) located behind the reinforcement (30) in an impact direction.

13. The vehicle front assembly (11) of claim 12, wherein the reinforcement (30) is configured to bear on the lighting assembly (90) during pedestrian impact.

14. The vehicle front assembly (11) of any of claims 1 to 13, wherein the reinforcement (30) is made of a plastic-containing material.

15. A vehicle (10) including a vehicle front assembly (11) of any of the preceding claims.

## Patentansprüche

1. Fahrzeugfrontanordnung (11), die Folgendes beinhaltet: eine Stoßfängerabdeckung (13), einen Querträger (19), der sich in eine erste Richtung zwischen zwei Endpunkten (20) erstreckt, einen oder mehrere Dämpfer (15, 17), die zwischen dem Querträger (19) und der Stoßfängerabdeckung (13) in einer zweiten Richtung orthogonal zur ersten Richtung angeordnet sind, eine Verstärkung (30), die steifer ist als die Stoßfängerabdeckung (13), durch die Stoßfängerabdeckung (13) verdeckt und direkt mit der Stoßfängerabdeckung (13) verbunden ist und eine Prallplatte (31) beinhaltet, die versetzt in einer dritten Richtung orthogonal zur ersten und zur zweiten Richtung über einem entsprechenden seitlichen Endpunkt (20) der zwei seitlichen Endpunkte (20) des Querträgers (19) angeordnet ist.

2. Fahrzeugfrontanordnung (11) nach Anspruch 1, wobei die Prallplatte (31) im Wesentlichen mit der Stoßfängerabdeckung (13) konform und/oder mit der Stoßfängerabdeckung (13) in Kontakt ist.

3. Fahrzeugfrontanordnung (11) nach Anspruch 2, wobei die Prallplatte (31) an die Stoßfängerabdeckung (13) angebondet ist.

4. Fahrzeugfrontanordnung (11) nach einem der Ansprüche 1 bis 3, wobei die Prallplatte (31) gemessen in einer Aufprallrichtung eine Dicke von 1-5 mm inklusive aufweist.

5. Fahrzeugfrontanordnung (11) nach einem der Ansprüche 1 bis 4, wobei die Prallplatte (31) peripher durch eine Einfassung (33) begrenzt ist, die angeordnet ist, sich von der Prallplatte (31) zu und/oder von der Stoßfängerabdeckung (31) weg zu erstrecken, und wahlweise an einer Verbindung (34) zwischen der Einfassung (33) und der Prallplatte (31) an die Stoßfängerabdeckung (13) angebondet ist.

6. Fahrzeugfrontanordnung (11) nach einem der Ansprüche 1 bis 5, wobei die Verstärkung (30) zum Befestigen der Prallplatte (31) an der Stoßfängerabdeckung (13) einen oder mehrere Befestigungspunkte (50, 53, 56) umfasst.

7. Fahrzeugfrontanordnung (11) nach den Ansprüchen 5 und 6, wobei der eine oder die mehreren Befestigungspunkte (50, 53, 56) durch die Einfassung (33) von der Prallplatte (31) getrennt sind.

8. Fahrzeugfrontanordnung (11) nach einem der Ansprüche 6 bis 7, wobei der eine oder die mehreren Befestigungspunkte (50, 53, 56) einen oder mehrere mittlere Befestigungspunkte (56), die zum Verbinden mit einem zentralen Abschnitt der Stoßfängerabdeckung (13) mit Bezug auf die erste Richtung in einem Mittenabschnitt der Verstärkung (30) angeordnet sind, und einen seitlichen Befestigungspunkt (50), der zum Verbinden eines seitlichen Abschnitts der Stoßfängerabdeckung (13) mit Bezug auf die erste Richtung in einem Seitenabschnitt der Verstärkung (30) angeordnet ist, beinhaltet.

9. Fahrzeugfrontanordnung (11) nach einem der Ansprüche 1 bis 8, wobei die Verstärkung (30) eine oder mehrere Rippen (35, 36, 37, 38, 39, 40, 41) beinhaltet, die angeordnet sind, sich von der Prallplatte (31) zu und/oder von der Stoßfängerabdeckung (13) weg zu erstrecken.

10. Fahrzeugfrontanordnung (11) nach den Ansprüchen 6 und 9, wobei sich die eine oder die mehreren Rippen (35, 36, 37, 38, 39, 40, 41) zwischen einer ersten Innenfläche der Einfassung (33) und einer zweiten Innenfläche der Einfassung (33) erstrecken.

11. Fahrzeugfrontanordnung (11) nach Anspruch 10, wobei die eine oder die mehreren Rippen (35, 36, 37, 38, 39, 40, 41) eine Dicke von 0,5-2,5 mm inklusive aufweisen.

12. Fahrzeugfrontanordnung (11) nach einem der Ansprüche 1 bis 11, die eine Beleuchtungsanordnung (90) beinhaltet, die sich in einer Aufprallrichtung hinter der Verstärkung (30) befindet.

13. Fahrzeugfrontanordnung (11) nach Anspruch 12, wobei die Verstärkung (30) dazu ausgelegt ist, sich während eines Fußgängeraufpralls auf die Beleuchtungsanordnung (90) auszuwirken.

14. Fahrzeugfrontanordnung (11) nach einem der Ansprüche 1 bis 13, wobei die Verstärkung (30) aus einem Kunststoff enthaltenden Material besteht.

15. Fahrzeug (10), das die Fahrzeugfrontanordnung (11) nach einem der vorhergehenden Ansprüche beinhaltet.

## Revendications

1. Ensemble avant de véhicule (11) comprenant : un habillage de pare-chocs (13), une traverse (19) s'étendant dans une première direction entre deux extrémités (20), un ou plusieurs amortisseurs (15, 17), disposés entre la traverse (19) et l'habillage de pare-chocs (13) dans une deuxième direction perpendiculaire à la première direction, un renfort (30), qui est plus rigide que l'habillage de pare-chocs (13), caché par l'habillage de pare-chocs (13), et directement relié à l'habillage de pare-chocs (13), comprenant une plaque d'impact (31) disposée décalée dans une troisième direction, perpendiculaire aux première et deuxième directions, au-dessus d'une extrémité latérale correspondante (20) parmi les deux extrémités latérales (20) de la traverse (19).

2. Ensemble avant de véhicule (11) selon la revendication 1, la plaque d'impact (31) étant sensiblement conforme à l'habillage de pare-chocs (13) et/ou en contact avec l'habillage de pare-chocs (13).

3. Ensemble avant de véhicule (11) selon la revendication 2, la plaque d'impact (31) étant collée sur l'habillage de pare-chocs (13).

4. Ensemble avant de véhicule (11) selon l'une quelconque des revendications 1 à 3, dans lequel la plaque d'impact (31) a une épaisseur de 1 à 5 mm, inclus, telle que mesurée dans une direction d'impact.

5. Ensemble avant de véhicule (11) selon l'une quelconque des revendications 1 à 4, la plaque d'impact (31) étant délimitée de manière périphérique par une jupe (33) disposée pour s'étendre depuis la plaque d'impact (31) vers et/ou à l'écart de l'habillage de pare-chocs (31) et de manière optionnelle étant collée sur l'habillage de pare-chocs (13) au niveau d'une jonction (34) entre la jupe (33) et la plaque d'impact (31).

6. Ensemble avant de véhicule (11) selon l'une quelconque des revendications 1 à 5, le renfort (30) comprenant un ou plusieurs points de fixation (50, 53, 56) pour fixer la plaque d'impact (31) sur l'habillage de pare-chocs (13).

7. Ensemble avant de véhicule (11) selon les revendications 5 et 6, les un ou plusieurs points de fixation (50, 53, 56) étant séparés de la plaque d'impact (31) par la jupe (33).

8. Ensemble avant de véhicule (11) selon l'une quelconque des revendications 6 à 7, dans lequel les un ou plusieurs points de fixation (50, 53, 56) comprennent un ou plusieurs points de fixation médians (56) disposés sur une partie médiane du renfort (30) par rapport à la première direction, pour un raccordement à une partie centrale de l'habillage de pare-chocs (13), et un point de fixation latéral (50) disposé sur une partie latérale du renfort (30) par rapport à la première direction, pour un raccordement à une partie latérale de l'habillage de pare-chocs (13).

9. Ensemble avant de véhicule (11) selon l'une quelconque des revendications 1 à 8, le renfort (30) comprenant une ou plusieurs nervures (35, 36, 37, 38, 39, 40, 41) disposées pour s'étendre depuis la plaque d'impact (31) vers et/ou à l'écart de l'habillage de pare-chocs (13) .

10. Ensemble avant de véhicule (11) selon les revendications 6 et 9, les une ou plusieurs nervures (35, 36, 37, 38, 39, 40, 41) s'étendant entre une première surface intérieure de la jupe (33) et une deuxième surface intérieure de la jupe (33).

11. Ensemble avant de véhicule (11) selon la revendication 10, les une ou plusieurs nervures (35, 36, 37, 38, 39, 40, 41) ayant une épaisseur de 0,5 à 2,5 mm, inclus.

12. Ensemble avant de véhicule (11) selon l'une quelconque des revendications 1 à 11, comprenant un ensemble d'éclairage (90) situé derrière le renfort (30) dans une direction d'impact.

13. Ensemble avant de véhicule (11) selon la revendication 12, dans lequel le renfort (30) est configuré pour porter sur l'ensemble d'éclairage (90) pendant un impact avec un piéton.

14. Ensemble avant de véhicule (11) selon l'une quelconque des revendications 1 à 13, dans lequel le renfort (30) est fabriqué dans un matériau contenant une matière plastique.

15. Véhicule (10) comprenant un ensemble avant de véhicule (11) selon l'une quelconque des revendications précédentes.
